# EUROPEAN PATENT APPLICATION

(11) **EP 4 399 979 A1**
(43) Date of publication of application: **17.07.2024**
(21) Application number: 23166398.0
(22) Date of filing: 03.04.2023
(51) Int. Cl.: A23L 13/40, A23L 13/77

(54) **METHOD FOR PREPARATION OF GYROS FROM SHEEP MEAT WITH ADDITION AND INCORPORATION OF OLIVE OIL**

(30) Priority: 16.01.2023 GR 20230100028
(71) Applicant: Aristotle University of Thessaloniki - E.L.K.E., 54636 Thessaloniki (GR)
(72) Inventor: ARSENOS, Georgios, 54124 Thessaloniki (GR); KALLITSIS, Theodoros, 56224 Thessaloniki (GR); AMVROSIADIS, Ioannis, 57019 Peraia Thessalonikis (GR); KASALIAS, Nikolaos, 57019 Peraia Thessalonikis (GR)
(74) Representative: Petsis, Christos

(57) **Abstract**

The present invention refers to a method for preparation of traditional gyros from sheep meat, with the addition and incorporation of olive oil, which includes cutting and standardization of fresh meat, direct cooling of standardized meat in temperature of approximately -2°C, cutting and mechanical tenderization of meat, addition of salt and water and tumbling, with which, in a remarkable way, olive oil and a stabilization suspension are added. The invention also refers to the preparation and use of the above suspension for the method of sheep meat gyros preparation, which is transported cooled or frozen.

## Description

### Field of the invention

The present invention refers to a method for preparation of traditional gyros from fresh or frozen sheep meat. Visible fat is removed, cut into 2-3cm thick strips and standardized. Then, a standard quantity of olive oil is incorporated to meat using a stabilization suspension, as a substitute of the fat that has been removed. The above method aims to achieve 15 to 18% total fat content of the final product, 3-6% of which is the remaining fat that could not be removed from meat manually and 12% is fat of the added olive oil.

Incorporation and stabilization of olive oil in meat to achieve the above fat content of gyros, as proposed in the present invention, aims at: 1) modifying fat quality in the final product, by replacing a proportion of animal fat with vegetal fat (olive oil) for dietary purposes and 2) improving sensory characteristics of the final product to increase consumer acceptance, which otherwise would be limited due to the intense smell of the adult sheep meat that is used and does not meet modern consumer preferences. With the special preparation method implemented herein, olive oil remains attached to the main part of the final product during cooking and no oil losses are observed.

### Technical background of the invention

Gyros is a meat product, which in Greece is commonly prepared from pork meat. In the recent years, gyros from chicken meat has also gained popularity among Greek consumers. Animal fat is naturally attached to meat slices that are used for gyros preparation. In cases that the amount of fat is not sufficient to achieve the desirable product characteristics, additional fat is used to reach 25% fat content, rendering the final product juicy and tasty.

The invention presented herein introduces the use of meat from adult dairy sheep for preparation of gyro, with the aim of improving capitalization of such meat, considering also that nowadays consumer acceptance of sheep meat is decreasing as mild tasting food products and diets low in saturated fat are becoming more popular. Consumption of sheep meat is impacted by its high saturated fat content (51% of its total fat content, whereas respective contents of pork and chicken meat are 35% and 28.5%) and its intense smell, mostly related to adult sheep meat and attributed mainly to fat.

Gyros is a very popular meat product, mainly prepared and consumed non-domestically. It is considered a good alternative for the better capitalization of adult sheep meat, because consumers would be less reluctant to try it since it does not require cooking at home and having to deal with the associated intense smell. Regarding the presented meat product, as much animal fat as possible is replaced by olive oil to improve its dietary and sensory characteristics, as mentioned above, and to exploit in a more efficient way the meat production of adult sheep. Despite the lowfat content of the final product compared to traditional pork gyros (15-18% compared to 25% of pork gyros), it retains its juiciness and taste even after cooking, due to the improved Water Holding Capacity (WHC) of muscle tissue that has been prepared as presented herein. Moreover, the nutritional, biological and dietary value of the final product are significantly improved compared to traditional gyros, due to the incorporation of olive oil, which is a good source of beneficial fatty acids, vitamins and antioxidants (polyphenols) with a good saturated/unsaturated fatty acid ratio.

Document DE 20020100447 refers to "Meat-based product" (heat-treated product from pork meat) according to the definition of paragraph 7.1, Annex I of the Regulation (EC) No 853/2004 of the European Parliament. Use and incorporation of olive oil is based on "restraining" it within the liquid excreted from meat during heat treatment, which is when protein denaturation of the liquid takes place. The above is achieved by immersing the product in olive oil before heat treatment.

Application documents for DE 20030100459 and 20040100113 refer to meat-based products, more specifically cold cuts and cured meat products prepared with heat treatment. Incorporation of olive oil in the final product is achieved by introducing it in an emulsified form. The latter enables strong attachment of olive oil to meat during the denaturation and coagulation of muscle proteins, actin and myosin, the extraction of which has been previously maximized. Respectively, in document 20040100113 incorporation of olive oil is achieved by adding it after the extraction of meat proteins and involves encapsulation and heat treatment of the products, since it refers to preparation of cold cuts and cured meat products such as ham.

It is obvious, that the above documents refer to the production of heat-treated meat products and more specifically, cold cuts and cured meat products.

Document DE 20050100400 refers to "products from fermented - aged, chopped meat - cold cuts and cured meat products such as salami" with the addition of olive oil being achieved "following emulsification of olive oil or/and other vegetal oil and solidification of the emulsion".

Document DE 20110100202 refers to products based on minced meat such as "heat-treated products made from minced meat or raw sausages or products based on coarsely chopped meat - burgers or other products such as pâté". This discloses the combined use of two emulsions and the encapsulation, shaping, and molding processes as well as the use of a meat paste as an intermediate (or unfinished) preparation ingredient.

Document DE 20060100655 discloses a preparation method of traditional gyros from lean pork meat with the addition of olive oil as a substitute of pork fat. The same applies to DE 20060100414, which refers to a "method for preparing fresh or frozen pork meat products, gyros and souvlaki, with olive oil incorporation and animal fat reduction". While in the latter two DE documents the improvement of pork meat products with the use of olive oil is pursued, the present invention, having as its objective the utilization of sheep meat (mainly adult dairy sheep from domestic farms, at the end of their productive life) intends to solve the problem of its intense smell and high saturated fat content by rinsing off the water-soluble osmogenic components (e.g. low molecular weight fatty acids) and replacing the visible fat of sheep meat with olive oil, and in particular by using a stabilization mixture, more specifically with the addition of a stabilizing suspension.

Most of the above documents refer mainly to cold cuts and cured meat products, heat-treated or fermented, or less commonly to pork meat. On the contrary, the present invention refers to the utilization of sheep meat for preparation of gyros, to tackle the ever-decreasing consumer acceptance of sheep meat, also considering the fact that consumers prefer mild-tasting products with low saturated fat content.

### Aim of the invention

The main objective is the utilization of meat from adult dairy sheep. In order to achieve this, the intense smell and the high saturated fat content associated with sheep meat, which limit its popularity among consumers, should be addressed.

Furthermore, the fact that healthy nutrition is one of the most important topics that concern experts and non-experts in recent years is accounted for. The main quality characteristics of food products that impact consumer preference are low calorific value, short preparation time, ingredients of natural origin (utilization of all available), absence of preservatives, low cost and sustainability.

The present invention refers to the preparation of traditional gyros from lamb meat, which has all the aforementioned characteristics. We decided to prepare gyros from sheep meat, because its popularity among consumers is expected to increase sheep meat consumption and thus improve its utilization.

To render sheep meat gyros a product of consumer choice (considering that sheep meat consumption is decreasing nowadays) deodorizing is attempted and achieved, resulting in its acceptance as an ingredient of traditional gyros. Sheep meat fat is rich in saturated fatty acids and associated with high risk of cardiovascular disease; in the invented product, the maximum fat amount possible is replaced by olive oil, which is one of the basics of the Mediterranean diet. Except for its nutritional benefits and considering the technical challenges of sheep meat processing (sheep meat is generally less tender and juicy compared to other types of meat), sheep meat gyros prepared according to the described method demonstrates excellent stability and can be preserved for at least six months in the freezer. With the addition and constant absorption of olive oil and water, the product exhibits exceptional tenderness, juiciness and unbeatable taste.

### Description of the invention

The present invention refers to preparation of sheep meat gyros, fresh or frozen, the visible fat of which is removed and then it is subjected to a special treatment, different from that of traditional gyros. Differences between the two preparation methods (i.e. the traditional and the one presented herein) are (i) the removal of visible fat from muscle tissue, which aims at improving the sensory and dietary characteristics of the final product, since fat removal takes away fat-soluble odorous substances, as well, (ii) the removal of water-soluble odorous substances of sheep meat and (iii) the introduction and incorporation of olive oil in the muscle tissue.

With the removal of visible fat from sheep meat, the extraction of water-soluble odorous substances (e.g. fatty acids of low molecular weight) and the absorption of olive oil, sheep meat sensory traits improve, allowing for its capitalization as a popular traditional food product.

According to the invention, a stabilization suspension is used with meat to achieve incorporation of olive oil. The latter suspension consists of a mixture of solid ingredients and additives; specifically, soy flour, preferably of 70% protein content, modified corn starch, sugars and an acidity regulator. All ingredients have been previously mixed with water in a 20% ratio by weight (w/w), to produce the stabilization suspension, which can be characterized as paste or porridge.

According to a preferable way of preparation, the mixture consists of 65% w/w soy flour, 25% w/w corn starch, 7% w/w sugars and 3% w/w acidity regulator.

According to a beneficial way of preparation, sugars consist of a mixture of dextrose and lactose in a ratio of 1:1.

According to a more advantageous way of preparation, acidity regulator is a mixture of ascorbic acid E300 and citric acid E33 in a ratio of 1:1.

Furthermore, it is worth noticing that according to the invention, the mixture of solid ingredients and additives that is used for preparing the suspension has been mixed with water in a 20% w/w ratio and the outcome (stabilization suspension) is used in a ratio of 12% by meat weight.

According to the invention, preparation method of sheep meat gyros requires conversion of muscle to meat. Muscle tissue consists mainly of muscle fibrils that together form muscle bundles. Each of these structural components of muscle and meat, is surrounded by a membrane of connective tissue, which secures muscle stability in vivo and thus, affects meat tenderness in vitro.

Immediately following slaughter, live muscle converts to meat. This conversion is related to a series of biochemical and natural alterations of muscle fibers. Meat gains its preferable taste and texture several days after slaughter. The whole process can be distinguished in two stages; the stage of introduction and development of post mortem rigidity and the stage of ripening.

The time of introduction of post mortem rigidity depends on muscle glycogen reserves, temperature, the animal's condition prior to slaughter etc. If the muscle is in a normal condition prior to slaughter, a sufficient pH decrease from pH 7.0 in live tissues to pH 5.6-5.8 is observed. Such low pH values ensure sufficient WHC of meat since they prevent, at least partially, multiplication of unwanted bacteria. Furthermore, they contribute directly to the normal progress of meat ripening, which results in improving its tenderness and taste. Consequently, various meat enzymes, mainly endogenous (neutral protease, cathepsins), induce breaking of connections between protein macromolecules, resulting in loosening and disintegration of muscle fiber structures and tenderization of meat.

Concurrently, some of the components released by the proteolysis process cause high pH levels, and as a result, the WHC of muscles can steadily be improved. Myosin and actin are the main myofibrillar proteins for the WHC of muscles. Their interaction, generally known as myosin-actin cycling, is responsible for muscle movement and action in living organisms. The energy that muscle uses to power the movement of contraction derives from Adenosine triphosphate (ATP), which also plays a role in muscle relaxation, as has been confirmed by several authors. ATP and phosphate radicals coming from phosphoric acid salts can increase both in vitro (the former) and in vivo (the latter) the sarcomere length and the muscle fiber. Additionally, a broadening in the space between actin and myosin filaments is also obtained. When the above process occurs in lean meat in vitro, muscle fibers can more easily retain water, which is the primary muscle component. This is characterized as "muscle fiber hypertrophy".

However, the use of meat with sufficient ATP levels, mainly for better management practices, is significantly limited. Hence, we should consider other parameters which can improve the meat's ability to absorb and retain olive oil. Meat pH was one such important parameter. Thus, the success of this invention was established by maintaining pH levels from 5.8-6.0, resulting in a sufficient expansion of muscle fiber structure. The simultaneous use of mechanical practices (tenderization, tumbling) was key to enabling the introduction and retention of the olive oil inside the muscle fascicle and in the intracellular space between the actin and myosin filaments (by adding a stabilizer).

According to an advantageous way of completing the invention, the addition of olive oil (10% of the meat), water (10% of the meat), salt (1.4% wlw of the final product), and stabilizing suspension (2% of the final product), during meat processing leads to the incorporation of the olive oil into the muscle mass. Olive oil is stabilized inside the muscle fascicles, and muscle fibers are not separated during the heating of the product. A part of the added olive oil enters the intracellular space and is held between the actin and myosin filaments with the help of "capillary forces". On the other hand, muscle proteins play an important role in emulsifying most of the added olive oil. It is generally known that salt can disperse the actin and myosin in the water content of meat. These hydrated proteins create a three-dimensional matrix ("matrix") that surrounds the droplets of olive oil with a very thin film. The thin protein membrane that forms around each droplet of olive oil blocks them from aggregating into larger oil "forms" and being excreted from meat during cooking. Consequently, the added olive oil is retained by meat even if it is fully cooked, resulting in a final juicier product. Improvement of meat WHC, which is achieved by adding salt and using methods such as tenderization and tumbling of meat pieces during gyros preparation, also contributes to this special outcome.

Sodium chloride is known for increasing both the WHC and meat water absorption "meat swelling". The impact of salt anions and cations on the hydration of muscle tissue can be explained by their interaction with the corresponding charged protein amino acids. At pH values greater than the isoelectric point of muscle tissue (5.1-5.3), meat proteins have more negatively charged amino acid residues, which tend to bind with the positive salt ion groups. The anion binding to the alkaline side of the isoelectric point results in a "open" structure, and increase in the size and WHC of muscle proteins is present. All the above improve the meat juiciness and preserve the light coloring of meat during cooking, which would otherwise be dark grey-brown due to the extensive loss of water and the simultaneous absence of fat.

According to this invention, the production method includes the use of olive oil, water, salt and a stabilization suspension, achieving the integration of olive oil into meat, and by following a more specific preparation method, natural seasonings and/or plant extracts could be added. Furthermore, by implementing specific technology that includes cutting meat into slices and tumbling these pieces, constant retention of the olive oil is achieved.

Olive oil is expected to remain inside the microstructure of meat throughout further processing, including "building" gyros on metallic sticks used for rotational roast cooking, as well as freezing it. Preservation of these products under freezing lasts for six months. The product is expected to remain safe for the consumer during this period. Also, its organoleptic characteristics, including taste, texture and juiciness, are expected to be maintained or further improved.

This invention refers to creating the appropriate conditions that are expected to:
- allow the introduction and retention of olive oil by muscles from which all visible fat has been previously removed
- integrate olive oil into the muscles in such a way that meat pieces do not "slip" from the hands of the workers and thus make the handling of meat during "setting up" of gyros safe and easy
- contribute to the retention of olive oil by muscle fibers during grilling of gyros, preventing the unsightly phenomenon of fat being excreted during this process
- substantially reduce the weight losses resulting from evaporation and water runoff during cooking, rendering the final product tastier, juicier and economically more beneficial
- contribute to color preservation of the cooked meat pieces (ensure that meat does not get darker during cooking), while at the same time allowing the color of the surface turn reddish
- substantially improve the overall quality, including, as mentioned above, the organoleptic characteristics of the final product.

Moreover, based on the above methods and practices, the surface layers of the gyros turn into the preferable red-brown color of grilled meat. Due to the very good WHC that characterized the product, the outcome of the satisfactory "grilled meat" color on gyros surface during cooking would be significantly delayed.

To achieve this color, a significant amount of water needs to be evaporated from the surface layers of the product, which would eliminate its "juiciness", which is one of its competitive advantages. This issue was solved by using specific carbohydrates during meat tumbling, which are decomposed and absorbed by the muscle tissue. Then, during cooking, these carbohydrates are "caramelized" and contribute to the presence of the "grilled meat" color.

To conclude, the preparation method of the present invention following results in:
- olive oil retention: Relatively high pH, contribution of sodium chloride, tenderization, tumbling
- improvement of organoleptic characteristics (smell, taste and juiciness) through animal fat removal and achieving deodorization of sheep meat, with the use of sodium chloride, tenderization, tumbling and constant incorporation of water by using the above suspension, where natural seasonings and/or plant extracts can added,
- the preservation of the preferable color is achieved by adding sugars to the stabilization suspension.

According to this invention, the production method of traditional gyros from sheep meat, with the addition and incorporation of olive oil, includes the following steps:
- Slicing and standardizing fresh meat consists of removing connective and fat tissue and then immediately cooling meat at a temperature of approximately -2 °C.
- The next day after reaching the above temperature, cutting meat into slices using a special knife and mechanical tenderizing by carving its surface and creating incisions, preferably 3-4 mm long and 2-3 mm deep.
- Placing meat in a device for tumbling with the addition of salt and water for approximately 15-20 minutes, simultaneously applying vacuum of 950 mBar to absorb salt and water and induce meat enlargement.
- Addition of an amount of oil, preferably olive oil, equal to the amount of fat removed during the first steps to achieve its complete absorption by meat muscle fibers.
- addition of a stabilizer suspension
- further tumbling for 5-10 minutes at a temperature of approximately 0-1 °C.

Furthermore, traditional sheep meat gyros, as presented herein, can be prepared in various sizes and weights according to the traditional way, wrapped in polyethene film and transported frozen.

Optionally, meat pieces are cooled and refrigerated, then gyros is traditionally shaped into an inverted cone and the final product is packed and kept under freezing.

In the present invention, preparation of gyros from lean sheep meat by replacing animal fat with olive oil includes in detail the following stages:

### A. Preparation of stabilization suspension

This includes soy flour, a modified maize starch, sugars and an acidity regulator, which are mixed with water in a ratio of 20% w/w to form the stabilizer suspension.

According to a preferred way of preparation, the mixture of the above components and additives consists of 65% w/w soybean flour, 25% w/w corn starch, 7% w/w sugars and 3% w/w acidity regulator.

According to an advantageous way of preparation, sugars consist of a mixture of dextrose and lactose in a ratio of 1:1.

According to a further beneficial way of preparation, the acidity regulator is a mixture of ascorbic acid E300 and citric acid E33 in a ratio of 1:1.

An example of the composition according to the above is given below.

| **Ingredient** | **Percentage (w/w)** |
|---|---|
| Soy concentrate | 65% |
| (70% protein) | |
| Modified corn starch (E1441) | 25% |
| Sugars (mixture of dextrose and lactose in a ratio of 1:1) | 7% |
| Acidity regulator (mixture of Ascorbic acid E300 and Citric acid E330 in a ratio of 1:1 | 3% |

This mixture of solid ingredients and additives is mixed with water to a fraction of 20% w/w to produce the stabilization suspension.

After mixing with a blender, the suspension remains for at least 5 hours (overnight before the day of preparation) to fully hydrate the soybean flour and the starch (hydration of starch grains - swelling).

### B. Standardization of sheep meat

This involves removal of connective and fat tissue, then cooling to -2 °C and after reaching the above temperature (the next day) cutting into slices according to existing practices using a special machine.

### C. Mechanical "tenderization" of meat with a staker.

This particular machine carves the surface of the meat using suitable "blades", and creates incisions 3-4 mm long and 2-3 mm deep. With this method a significant increase in meat surface is achieved without reducing the size of the pieces. In other words, there are pieces with "slotscuts" or "engravings", through which, easier diffusion" of the ingredients inside the muscle bundles is facilitated.
D. Placing meat in a Tumbler with water and salt, part of the added water (-2 °C) and the preferable natural seasonings and plant extracts - essential oils. Meat is gently kneaded for about 15-20 minutes while applying a vacuum of 950mBAR. During this time period, the added salt and water in the tumbler have been absorbed by muscles and muscle fibrils, causing them to swell.
E. Addition of olive oil and further tumbling for about 20 minutes, during which complete absorption by the swollen muscle fibers is achieved.
F. Adding the above stabilization suspension according to an advantageous way of the invention, at an amount of 12% of meat weight and continuing tumbling for an additional 5-10 minutes at a regulated temperature of 0-1°C. With this process, binding of free water is achieved: With the soluble proteins of meat (e.g. actin and myosin), a complex gel is formed on the surface of meat pieces, trapping any free droplets of olive oil.

By applying these processing steps the following are achieved:
- During the stage of muscle cutting-dissection there is significant increase in meat surface area and creation of multiple entry gates for the diffusion of olive oil and other elements of the marinade into the muscle microstructure.
- During tumbling with the simultaneous application of vacuum and the addition of salt and water a swelling-opening of the muscle occurs, which facilitates the further diffusion and distribution of olive oil in the interior of the muscle microstructure.
- The addition of carbohydrates and other additives at the last stage of tumbling leads to the creation of a gel that includes the elements of muscle microstructure and olive oil.

Following tumbling, meat pieces are put on metallic sticks in the traditional way for the rotational roast cooking process, with the final product shaped into an inverted cone that comes in various sizes and weights. These products are then wrapped in polyethylene film and put in the freezing tunnel.

Meat products prepared with the above procedure are characterized by a stable and uniform structure and when cooled they are tender and juicy and have a preferable reddish-brown color of roasted meat.

The olive oil used, entering and binding to the interior of the muscle microstructure, significantly improves tenderness as well as juiciness of the final product by improving the ability to retain water during its heat treatment.

The final product is roasted in the traditional way (i.e., rotational roast cooking), and cut perpendicularly to the meat slices, at the appropriate time and offered for consumption like traditional gyros is offered. During heat treatment its weight losses do not exceed 15-20% and are relatively lower than those of traditional gyros, which in some cases are 35%. They are primarily due to water loss and secondarily due to olive oil loss, resulting in a final product that retains its juiciness to the maximum. Its smell and taste are acceptable by consumers due to the removal of the unwanted fat-soluble and water-soluble odorous substances of sheep meat. This is also clearly seen from the sensory evaluation carried out by a team of experts using a designated evaluation form. The roasted gyros of the present invention was compared to a conventional one produced from sheep meat.

### Sensory evaluation

The sensory characteristics of the traditional sheep meat gyros prepared with the method described, were assessed by a group of trained evaluators, compared to a corresponding sheep meat gyros that was conventionally prepared (organoleptic error assessment tests). Results showed that the described product was characterized as superior both in appearance, and especially in its tenderness, smell and taste. On a scale of 1 - 5, from least to most acceptable, its rating was: External appearance 4.0, tenderness-chewiness 4.5 and smell and taste 5.0. Accordingly, the conventionally prepared gyros scored external appearance 4.0, tenderness-chewiness 3.0 and smell and taste 3.0. It is evident that deodorization and oil and water retention gave the product elements of preference and therefore, its successful utilization is expected.

The traditional sheep meat gyros prepared by the described method exhibits excellent stability (it does not release excess liquid during cooking, which in turn is responsible for the unsightly appearance of coagulated liquids during cooking - "does not dry out") and is preserved for at least 6 months in the freezer without changes in its sensory characteristics.

By adding olive oil and water, salt, natural seasonings, and plant extracts are also successfully integrated, while the use of a stabilizing suspension results in the final product being extremely tender, juicy and with very good taste.

## Claims

1. Method for preparation of traditional sheep meat gyros with the addition and integration of olive oil, **characterized in that** it includes the following steps:
i. Cutting and standardization of fresh sheep meat, which consists of removing connective and fat tissue and immediate cooling of standardized meat at a temperature of approximately -2°C,
ii. Cutting, after reaching the above temperature the next day, into slices using a special knife and mechanical tenderizing of the above sheep meat, which consists in scoring meat surface creating slits, preferably 3-4 mm long and 2-3 mm deep,
iii. Placement of the above sheep meat in a device for tumbling with the addition of salt and water, where tumbling is performed for approximately 15-20 minutes with the simultaneous application of a vacuum of 950 mBar in order to absorb the above salt and water and therefore swell the meat,
iv. Addition of olive oil, in a quantity equal to the fat removed during the above standardization, that allows its complete absorption by the swollen muscle fibers of the above meat,
v. Addition of a stabilization suspension and then further tumbling for about 5-10 minutes at a regulated temperature of about 0-1 °C.

2. Method according to the previous claim 1, wherein after the last stage (v) follows cooling and remaining of the above pieces of sheep meat under refrigeration and, setting up the gyros according to the traditional way so that it takes the shape of an inverted cone, followed by packaging and cooling or freezing of the final product.

3. Method according to claim 1 or 2, **characterized in that** the above stabilization suspension is a mixture of solid components and additives comprising a soy concentrate, preferably of about 70% protein content, a modified maize starch, sugars, and an acidity regulator, that are mixed with water, particularly at a ratio of about 20% net weight to create this stabilization suspension.

4. Method according to the previous claim 3, **characterized in that** the above mixture of solid components and additives comprises soy concentrate, modified maize starch, sugars and acidity regulator in a proportion of about 65%, 25%, 7% and 3% net weight respectively.

5. Method according to any of the claims 3 to 4, **characterized in that** the above stabilization suspension is used in a proportion of approximately 12% of the net weight of sheep meat.

6. Method according to any of the claims 3 to 5, **characterized in that** the above sugars consist of a mixture of dextrose and lactose in a ratio of 1:1.

7. Method according to any of the claims 3 to 6, **characterized in that** the above acidity regulator is a mixture of ascorbic acid E300 and citric acid E33 in a ratio of 1:1.

8. Method according to any of the preceding claims, **characterized in that** after the addition of the above stabilizing suspension, it is left for a period of at least 5 hours for complete hydration.

9. Method according to one of the claims 1 to 8, **characterized in that** in step (iii) the meat is placed for tumbling additional natural seasonings and plant extracts, and/or essential oils are added.

10. Gyros prepared with the method defined according to any of the claims 1-9 using a stabilizing suspension comprising a mixture of solid ingredients and additives consisting of a soy concentrate of preferably 70% protein content, a modified maize starch, sugars, and an acidity regulator.

11. Gyros preparation according to claim 10, **characterized in that** said stabilizing suspension comprises a mixture of solid components and additives consisting of soy flour, preferably of a 70% protein content, modified maize starch, sugars, and an acidity regulator in a proportion of approximately 65%, 25%, 7% and 3%, net weight respectively.

12. Gyros preparation according to any of the claims 10 or 11, **characterized in that** this stabilizing includes the sugars as a mixture of dextrose and lactose in a ratio of 1:1, and/or **in that** it includes an acidity regulator, which is a mixture of ascorbic acid E300 and citric acid E33 in a ratio of 1:1.

13. Gyros preparation according to any of the claims 10 to 12, **characterized in that** said mixture of solid components and additives of said stabilizing mixture is mixed with water at a ratio of 20% net weight so that the stabilization suspension occurs.

14. Gyros preparation according to any of the claims 10 to 13, **characterized in that** said stabilizing suspension is used in a proportion of about 12% of the weight of sheep meat.

15. Gyros preparation according to any of the claims 10 to 14, **characterized in that** it is transferred cooled or frozen.
